# EUROPEAN PATENT SPECIFICATION

(11) **EP 0 326 436 B1**
(45) Date of publication and mention of the grant of the patent: **05.10.1994**
(21) Application number: 89300874.8
(22) Date of filing: 30.01.1989
(51) Int. Cl.: G06K 9/38

(54) **Optimal image-quality selection apparatus**
Gerät zur Optimalbildqualitätsselektion
Appareil de sélection de qualité d'image optimale

(30) Priority: 29.01.1988 JP 18823/88
(43) Date of publication of application: 02.08.1989
(73) Proprietor: NEC CORPORATION, Tokyo (JP)
(72) Inventor: Umeda, Tetsuo, Minato-ku Tokyo (JP); Sugiura, Fumihiko, Minato-ku Tokyo (JP)
(74) Representative: Abnett, Richard Charles

(56) References cited:
- EP-A- 0 238 027

## Description

The present invention relates to optimal image-quality selection apparatus for selecting the optimal quality of an image in an optical reader, and, more particularly, relates to apparatus for selecting an optimal threshold level for the image.

In a conventional optical reader, the following methods are available for digitizing a video signal output from a scanner for application to a processor: a method of digitizing a video signal by reference to fixed brightness threshold levels; a method of digitizing a video signal on the basis of the brightness level of a background color; a method of digitizing a video signal by using a spatial filter so as to correspond to a change in the brightness of a character, graphic, or the like; and a method of processing a video signal as a multi-level signal.

It is difficult to apply the method of processing the video signal as a multi-level signal to a character reader used for reading addresses on postal matters because of the following reasons. That is, there are many kinds of envelopes, having different colors of various depths, and various thicknesses of the materials thereof. When the envelope material is thin, patterns printed on the envelope with a light color and/or the contents of the envelope may be seen through. In addition, the addresses printed on the envelopes are of varying darkness.

Accordingly, the video signal output from the scanner of the character reader has too broad a range of brightness level to be digitized as a multi-level signal. Therefore, the digitizing method on the basis of the background level, or the digitizing method using a spatial filter, have been employed.

However, when a brightness threshold level is set to read addresses which are printed with light characters, images including many noise components other than the addresses appear when the addresses are printed on thin envelopes. On the other hand, when the threshold level is set not to detect the noise components, the addresses which are printed with light-color characters can not be read.

It is an object of the present invention to provide an optimal image-quality selection apparatus free from the drawbacks described above.

The present invention is defined in claim 1 below, to which reference should now be made. Advantageous features are set forth in the appendant claims.

Our European Patent Application EP-A-0 238 027 describes optical character recognition apparatus which digitises an image signal by reference to two threshold levels. The apparatus then determines the ratio of the number of isolated black or white pixels or dots ("meshes") to the total number of black pixels, and selects the level at which the ratio is at a minimum. In this way single-pixel noise can be minimised. However, this is limited in its ability to improve the image quality, especially with images that are particularly dark or particularly light.

The invention will now be described in more detail, by way of example, with reference to the accompanying drawings, in which:
**Figure 1** is a block diagram of an optimal image-quality selection apparatus according to an embodiment of the present invention; and
**Figures 2A, 2B, and 2C** are views for explaining an operation of the apparatus shown in Figure 1.

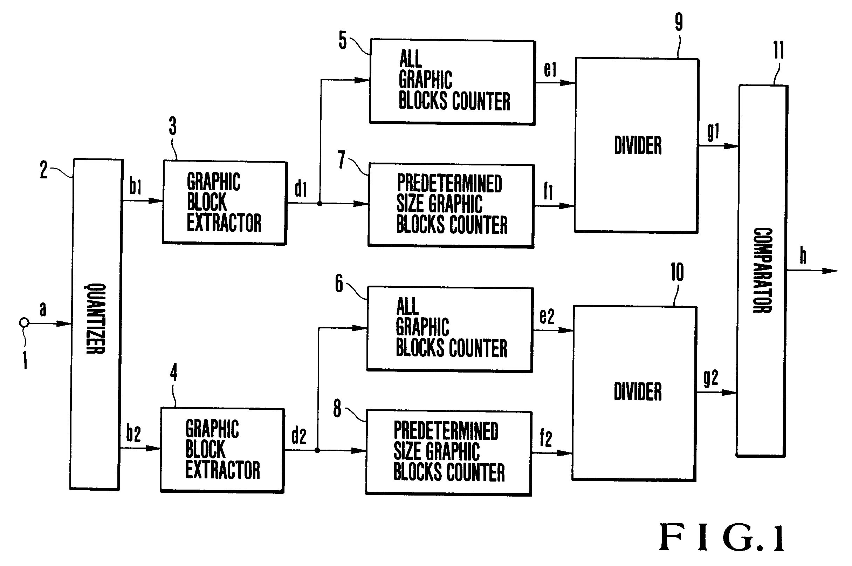

Figure 1 is a block diagram showing an optimal image-quality selection apparatus according to an embodiment of the present invention. Referring to Figure 1, a video signal a representing an image is input from a scanner (not shown) to a quantizer 2 via an input terminal 1. The quantizer 2 quantizes the input video signal a by using two threshold levels and outputs binary video signals b₁ and b₂ representing the image by reference to high and low threshold levels, respectively. The binary video signals b₁ and b₂ are input to graphic block extractors 3 and 4, respectively. The graphic block extractor 3 extracts graphic blocks from the binary video signal b₁ and outputs an information signal d₁ representing the size, e.g., the height and width, of each extracted graphic block. The graphic block is defined as a chain or contiguous block of dots or pixels. The graphic block extractor 4 extracts graphic blocks from the input binary video signal b₂ and outputs an information signal d₂ representing the size, e.g., the height and width, of each extracted graphic block.

An all graphic blocks counter 5 counts the total number of graphic blocks extracted from the information signal d₁ output from the graphic block extractor 3. The all graphic blocks counter 5 outputs a first all graphic block count signal e₁. An all graphic blocks counter 6 counts the total number of blocks extracted from the information signal d₂ output from the graphic block extractor 4 and outputs a second all graphic block count signal e₂.

A predetermined size graphic blocks counter 7 counts the number of graphic blocks having a predetermined size or falling within a predetermined range from the information signal d₁ output from the graphic block extractor 3 and outputs a first predetermined size block count signal f₁. A predetermined size graphic block counter 8 counts the number of graphic blocks having a predetermined size from the information signal d₂ output from the graphic block extractor 4 and outputs a second predetermined size block count signal f₂.

A divider 9 calculates the ratio of the first predetermined size block count signal f₁ output from the counter 7 to the first all graphic block count signal e₁ output from the counter 5, that is, the ratio f₁/e₁, and outputs a first ratio signal g₁ representing the ratio f₁/e₁. A divider 10 calculates the ratio of the second predetermined size block count signal f₂ output from the counter 8 to the second all graphic block count signal e₂ output from the counter 6, i.e., the ratio f₂/e₂, and outputs a second ratio signal g₂ representing the ratio f₂/e₂.

A comparator 11 compares the first and second ratio signals g₁ and g₂ from the dividers 9 and 10 and outputs an optimal image-quality signal h which defines as optimal image quality the larger of the values represented by the first or second ratio signal g₁ or g₂.

The quantizer 2 may be a quantizer which dynamically traces the brightness of the background color, or a quantizer for performing image processing by using a spatial filter. It is essential that the quantizer 2 outputs the video signals b₁ and b₂ by reference to two threshold levels, respectively. The binary video signals b₁ and b₂ are input to the graphic block extractors 3 and 4 each having a character recognition apparatus, an image recognition apparatus, or a video memory, and are simultaneously or sequentially processed. Detailed arrangements of the graphic block extractors 3 and 4 are described in Japanese Patent Application No. 56-27512, publication No. 57-141779, entitled "Character Extraction Apparatus". For example, if characters are to be read, the predetermined size graphic blocks correspond to the size of a character. The size of the character can be represented by, e.g., its height and width.

The operation of the optimal image-quality selection apparatus shown in Figure 1 will now be described. When the image signal a sent from a scanner (not shown) is input to the quantizer 2 through the input terminal 1, the quantizer 2 performs quantization by using two binary threshold values and outputs the two video signals b₁ and b₂ each representing an image by reference to high and low threshold levels, respectively. The graphic block extractor 3 extracts graphic blocks included in an image represented by the binary video signal b₁ having the high threshold level and outputs the information signal d₁ representing the size of each extracted graphic block. Similarly, the graphic block extractor 4 detects graphic blocks included in an image represented by the binary video signal b₂ having the low threshold level and outputs the information signal d₂ representing the size of each extracted block.

The all graphic blocks counter 5 counts the number of graphic blocks represented by the information signal d₁ regardless of the sizes of the graphic blocks and outputs the first all graphic block count signal e₁. The all graphic blocks counter 6 counts the number of graphic blocks represented by the information signal d₂ regardless of the sizes of the graphic blocks and outputs the second all graphic block count signal e₂.

The predetermined size graphic blocks counter 7 counts the number of graphic blocks having the predetermined size or falling within a predetermined range and outputs the first predetermined graphic block count signal f₁. The predetermed size graphic blocks counter 8 counts the number of graphic blocks having the predetermined size or falling within the predetermined range and outputs the second predetermined graphic block count signal f₂. Each of the predetermined size graphic blocks counters 7 and 8 counts only the number of graphic blocks which satisfy the conditions Hmin ≦ H ≦ Hmax and Wmin ≦ W ≦ Wmax if the size information of the graphic block represents a height H and a width W. Hmin, Hmax, Wmin, and Wmax can be arbitrarily determined.

The divider 9 calculates the ratio of the first predetermined size graphic block counts signal f₁ to the first all graphic block count signal e₁, i.e., the ratio f₁/e₁ and outputs the first ratio signal g₁ representing the ratio of the number of graphic blocks having a predetermined size to the number of all graphic blocks. The divider 10 calculates the ratio of the second predetermined size graphic block count signal f₂ to the second all graphic block count signal e₂, i.e, the ratio f₂/e₂ and outputs the second ratio signal g₂ representing the ratio of the number of graphic blocks having a predetermined size to the number of all graphic blocks.

The comparator 11 compares the first and second ratio signals g₁ and g₂ to select the larger ratio signal and outputs a signal h representing that the set threshold level corresponding to the larger ratio signal is optimal.

The apparatus shown in Figure 1 was tested with paper samples A and B which are thick and thin, respectively, and the following results were obtained.

The characters were written on the paper sample A with a light color. In this case, the many character images extracted by the lower threshold level were blurred and the character images extracted by the higher threshold level had a better image quality.

More specifically, the first all graphic block count e₁ = 30, the second all graphic block count e₂ = 50, the first predetermined size graphic block count f₁ = 28, and the second predetermined size graphic block f₂ = 23.

In case of the sample B the paper was very thin, and characters printed on the lower surface of the paper were seen through the paper. These characters appeared as noise at the higher threshold level, but did not appear at the lower threshold level. Test results were as follows: the first all graphic block count e₁ = 100; the second all graphic block count e₂ = 30; the first predetermined size graphic block count f₁ = 25; and the second predetermined size graphic block count f₂ = 23.

The images of the characters written on the sample A have higher image quality at the higher threshold level, while images of the characters written on the sample B have higher image quality at the lower threshold level. In the case of the sample A, g₁ = f₁/e₁ = 28/30 at the lower threshold level and g₂ = f₂/e₂ = 23/50 at the higher threshold level, so that the condition g₁ > g₂ obtains, thereby selecting the higher threshold level as the threshold level for optimal image quality. In the case of the sample B, g₁ = f₁/e₁ = 25/100 at the higher threshold level and g₂ = f₂/e₂ = 23/30 at the lower threshold level, so that the condition g₁ < g₂ obtains, thereby selecting the lower threshold level as the level for optimal image quality.

In the above embodiment, the two threshold levels are discriminated. However, three or more threshold levels can be discriminated.

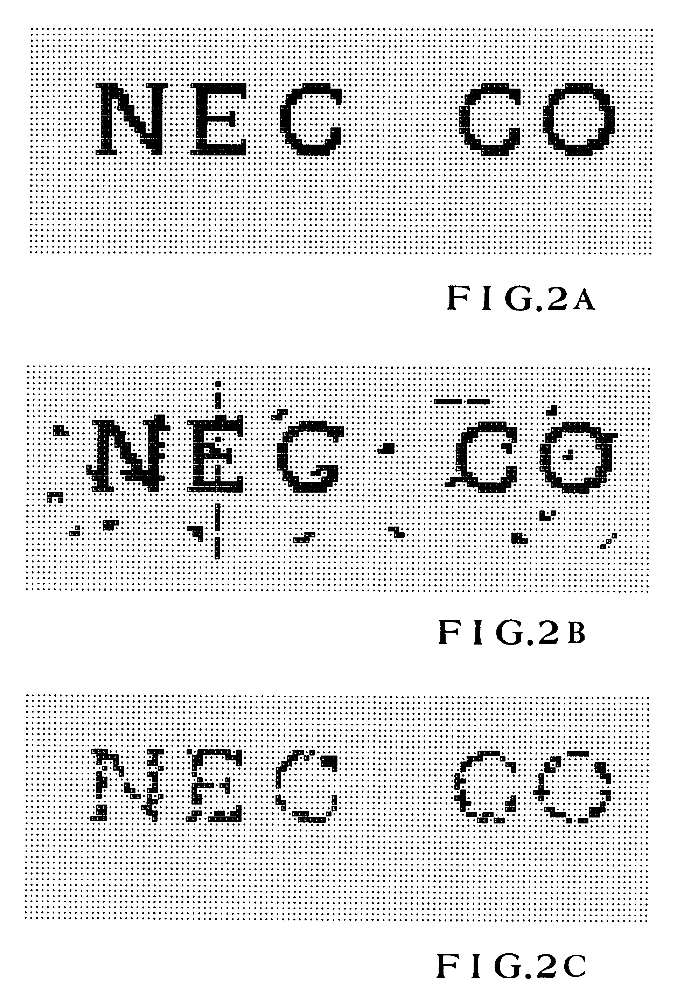

Figures 2A, 2B, and 2C show images having three image qualities, i.e., an optimal image quality, an excessively dark image quality, and an excessively light image quality.

If the predetermined range of the characters was exemplified by 10 ≦ H ≦ 20 and 10 ≦ W ≦ 20, the number f of graphic blocks having a predetermined size, the number e of all graphic blocks, and the ratio g of the number of graphic blocks having a predetermined size to the number of all graphic blocks were obtained as follows:

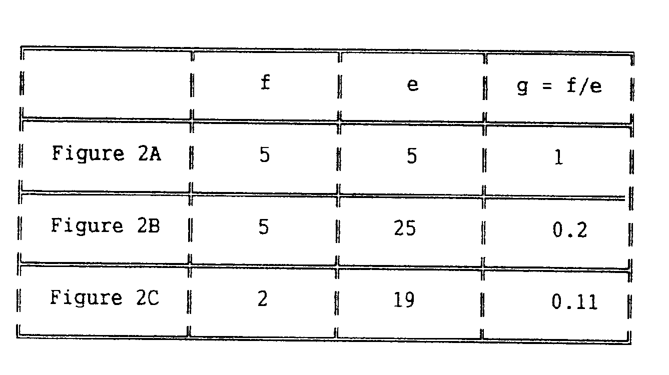

The image having the largest f/e in Figure 2A is selected as the image having optimal image quality.

## Claims

1. Optical image-quality selection apparatus, comprising:
quantizing means (2) for quantizing a signal representing an image, obtained from a scanner, to output two or more binary video signals representing the image by reference to different binarization threshold levels;
first detecting and counting means (3,4,5,6) for detecting and counting all the graphic blocks consisting of a contiguous block of dots of the same colour included in each of the two or more video signals;
second detecting and counting means (7,8) for detecting and counting the number of graphic blocks having a predetermined size in each of the two or more video signals;
calculating means (9,10) for calculating the ratio of the number of graphic blocks having the predetermined size to the total number of graphic blocks included in each of the two or more video signals, respectively; and
selecting means (11) for selecting the largest one out of the ratios corresponding to the two or more video signals, to output a signal representing that the threshold level corresponding to the largest ratio is optimal.

2. Apparatus according to claim 1, in which the first and second detecting and counting means comprise a plurality of block extractors (3,4) for receiving the two or more video signals respectively for extracting graphic blocks, and a plurality of pairs of first and second counters (5,7; 6,8), one connected to each block extractor, the first counter (5,6) of each pair counting the total number of graphic blocks and the second counter (7,8) of each pair counting the number of graphic blocks having a predetermined size.

3. Apparatus according to claim 1 or 2, in which the calculating means comprises a plurality of dividers (9,10), each divider calculating the ratio of the number of graphic blocks having a predetermined size to the total number of graphic blocks for a respective threshold level.

4. Apparatus according to claim 1, 2 or 3, in which the selecting means comprises a comparator (11) for comparing the ratios output from the calculating means to select the largest ratio, and for outputting a signal representing the signal which has the largest ratio as having the optimal image quality.

## Patentansprüche

1. Vorrichtung zur Optimalbildqualitätsselektion, die aufweist:
eine Digitalisierungseinrichtung (2) zum Digitalisieren eines von einem Scanner erhaltenen Signals, das ein Bild darstellt, um zwei oder mehr binäre Videosignale auszugeben, die das Bild unter Bezug auf verschiedene Digitalisierungsschwellwertniveaus darstellen;
eine erste Erfassungs- und Zähleinrichtung (3, 4, 5, 6) zum Erfassen und Zählen aller in jedem der zwei oder mehr Videosignale enthaltenen graphischen Blöcke, die aus einem zusammenhängenden Block von Punkten der gleichen Farbe bestehen;
eine zweite Erfassungs- und Zähleinrichtung (7, 8) zum Erfassen und Zählen der in jedem der zwei oder mehr Videosignalen enthaltenen Anzahl von Graphikblöcken mit festgelegter Größe;
eine Berechnungseinrichtung (9, 10) zur Berechnung des Verhältnisses der Anzahl graphischer Blöcke mit der festgelegten Größe zur Gesamtzahl graphischer Blöcke, die in jedem der zwei oder mehr Videosignale enthalten sind; und
eine Auswahleinrichtung (11) zum Auswählen des größten der Verhältnisse, die den zwei oder mehr Videosignalen entsprechen, um ein Signal auszugeben, das darstellt, daß das dem größten Verhältnis entsprechende Schwellwertniveau optimal ist.

2. Vorrichtung nach Anspruch 1, bei der die erste und zweite Erfassungs- und Zähleinrichtung mehrere Blockmasken (3, 4) zum Empfang der zwei oder mehr Videosignale, um jeweils Graphikblöcke zu extrahieren, und mehrere Paare von ersten und zweiten Zählern (5, 7; 6, 8) aufweisen, wobei einer mit jeder Blockmaske verbunden ist, der erste Zähler (5, 6) jedes Paares die Gesamtzahl von Graphikblöcken zählt und der zweite Zähler (7, 8) jedes Paares die Anzahl der Graphikblöcke mit einer festgelegten Größe zählt.

3. Vorrichtung gemäß Anspruch 1 oder 2, bei der die Berechnungseinrichtung mehrere Dividierer (9, 10) aufweist, wobei jeder Dividierer das Verhältnis der Anzahl von Graphikblöcken mit einer festgelegten Größe zur Gesamtzahl von Graphikblöcken für ein jeweiliges Schwellwertniveau berechnet.

4. Vorrichtung gemäß Anspruch 1, 2 oder 3, bei der die Auswahleinrichtung einen Vergleicher (11) zum Vergleich der von der Berechnungseinrichtung ausgegebenen Verhältnisse aufweist, um das größte Verhältnis auszuwählen und um ein Signal auszugeben, welches das Signal mit dem größten Verhältnis als die Optimalbildqualität aufweisend darstellt.

## Revendications

1. Appareil de sélection de qualité d'image optique, comprenant:
un moyen de quantification (2) pour quantifier un signal représentant une image, obtenu à partir d'un scanner, pour produire deux signaux vidéo binaires ou plus représentant l'image par référence à des niveaux de seuils de binarisation différents;
un premier moyen de détection et de comptage (3,4,5,6) pour détecter et compter tous les blocs graphiques consistant en un bloc continu de points de la même couleur compris dans chacun des deux signaux vidéo ou plus;
un second moyen de détection et de comptage (7,8) pour détecter et compter le nombre des blocs graphiques ayant une dimension prédéterminée dans chacun des deux signaux vidéo ou plus;
un moyen de calcul (9,10) pour calculer le rapport du nombre de blocs graphiques ayant la dimension prédéterminée sur le nombre total de blocs graphiques compris dans chacun des deux signaux vidéo ou plus, respectivement; et
un moyen de sélection (11) pour sélectionner le plus grand des rapports correspondant aux deux signaux vidéo ou plus, pour produire un signal représentant que le niveau de seuil correspondant au plus grand rapport est optimal.

2. Appareil selon la revendication 1, dans lequel les premier et second moyens de détection et comptage comprennent une pluralité d'extracteurs de blocs (3,4) pour recevoir les deux signaux vidéo ou plus respectivement pour extraire des blocs graphiques, et une pluralité de paires de premier et second compteurs (5,7;6,8), une connectée à chaque extracteur de blocs, le premier compteur (5,6) de chaque paire comptant le nombre total de blocs graphiques et le second compteur (7,8) de chaque paire comptant le nombre de blocs graphiques ayant une taille prédéterminée.

3. Appareil selon la revendication 1 ou 2, dans lequel le moyen de calcul comprend une pluralité de diviseurs (9,10), chaque diviseur calculant le rapport du nombre de blocs graphiques ayant une dimension prédéterminée sur le nombre total de blocs graphiques pour un niveau de seuil respectif.

4. Appareil selon la revendication 1, 2 ou 3, dans lequel le moyen de sélection comprend un comparateur (11) pour comparer les rapports produits par le moyen de calcul pour sélectionner le plus grand rapport, et pour produire un signal représentant le signal qui a le plus grand rapport comme ayant la qualité d'image optimale.
